# EUROPEAN PATENT APPLICATION

(11) **EP 3 051 796 A1**
(43) Date of publication of application: **03.08.2016**
(21) Application number: 14847448.9
(22) Date of filing: 26.09.2014
(51) Int. Cl.: H04N 5/232, G06T 7/20, G08B 25/00, H04N 5/225, H04N 7/18

(54) **MONITORING CAMERA, MONITORING SYSTEM, AND MOTION DETERMINATION METHOD**

(30) Priority: 26.09.2013 JP 2013199833
(71) Applicant: MITSUBISHI ELECTRIC CORPORATION, Chiyoda-ku Tokyo 100-8310 (JP)
(72) Inventor: SHIMADA, Toshiaki, Tokyo 100-8310 (JP)
(74) Representative: Meissner Bolte Partnerschaft mbB
(86) International application number: PCT/JP2014/075714
(87) International publication number: WO 2015/046462

(57) **Abstract**

Disclosed is a monitoring camera (1) including a picture shooter (10) to perform shooting on a target area to acquire a picture, a block partitioner (a motion detecting unit 15) to partition the picture acquired by the picture shooter (10) into a plurality of blocks, a detection sensitivity acquirer (an input output unit 13) to acquire detection sensitivity for each of the blocks into which the picture is partitioned by the block partitioner, a motion detector (15) to determine the presence or absence of a motion for each of the blocks, into which the picture is partitioned by the block partitioner, according to the corresponding detection sensitivity acquired by the detection sensitivity acquirer, and an outputter (the input output unit 13) to output a detection result acquired by the motion detector (15).

## Description

### FIELD OF THE INVENTION

The present invention relates to a monitoring camera for, a monitoring system for, and a motion detection method of performing motion determination on the basis of a picture acquired by performing shooting on a target area.

### BACKGROUND OF THE INVENTION

Generally, when it is determined that an invader is staying in a target area for monitoring, a monitoring system provides a warning for outside the system. This determination of the presence or absence of an invader is carried out typically by performing motion determination on a picture acquired by performing shooting on the target area (e.g., refer to Patent Reference 1).

In a conventional technology disclosed in the Patent Reference 1, a target area is monitored by a plurality of monitor stations. A monitoring camera partitions a picture acquired by performing shooting on that target area into a plurality of blocks and transmits a feature quantity acquired for each of the blocks to the monitor stations.

Each monitor station then performs motion determination on the basis of the feature quantity received thereby and acquired for each of the blocks by using a sensitivity parameter for a detecting process which the monitor station has.

### RELATED ART DOCUMENT

### PATENT REFERENCE

Patent Reference 1: Japanese Unexamined Patent Application Publication JP 2007-019 759 A

### SUMMARY OF THE INVENTION

### PROBLEMS TO BE SOLVED BY THE INVENTION

However, in the conventional technology disclosed in the Patent Reference 1, a single sensitivity parameter is used for each picture. Therefore, there is a problem that objects are detected locally with an excessive frequency and, conversely, objects are hard to detect, according to the distance to the monitoring camera, the sizes or patterns of objects, or a sporadic change of illumination.

On the other hand, in conventional technologies, a plurality of monitor stations are needed when motion determination is performed by using a sensitivity parameter different for each block. Therefore, there is a problem that the monitoring system becomes complicated and the cost becomes high. Another problem is that the number of blocks into which each picture is partitioned is the order of the number of monitor stations.

Further, in conventional technologies, it is necessary to transmit the feature quantity acquired for each block from the monitoring camera to the monitor stations. Therefore, there is a problem that a large-volume data transfer is needed between the monitoring camera and the monitor stations. For example, in a system or the like that needs to perform surveillance in real time, it is necessary to secure a transmission capacity between the monitoring camera and the monitor stations.

The present invention has been made in order to solve the above-mentioned problems, and it is therefore an object of the present invention to provide a monitoring camera, a monitoring system and a motion detection method capable of preventing erroneous motion detection and omissions in motion detection in each of blocks into which a picture is partitioned, with a simple and low-cost configuration.

### MEANS FOR SOLVING THE PROBLEM

In accordance with the present invention, there is provided a monitoring camera including: a picture shooter to perform shooting on a target area to acquire a picture; a block partitioner to partition the picture acquired by the picture shooter into a plurality of blocks; a detection sensitivity acquirer to acquire detection sensitivity for each of the blocks into which the picture is partitioned by the block partitioner; a motion detector to determine the presence or absence of a motion for each of the blocks, into which the picture is partitioned by the block partitioner, according to the corresponding detection sensitivity acquired by the detection sensitivity acquirer; and an outputter to output a detection result acquired by the motion detector.

### ADVANTAGES OF THE INVENTION

Because the monitoring camera in accordance with the present invention is configured as indicated above, the monitoring camera can prevent erroneous motion detection and omissions in motion detection in each of the blocks, into which the picture is partitioned, with a simple and low-cost configuration.

### BRIEF DESCRIPTION OF THE FIGURES

- FIG. 1: is a block diagram showing the configuration of the whole of a monitoring system including a monitoring camera in accordance with Embodiment 1 of the present invention;
- FIG. 2: is a block diagram showing the configuration of the monitoring camera in accordance with Embodiment 1 of the present invention;
- FIG. 3: is a diagram showing picture partitioning for determination of a motion by the monitoring camera in accordance with Embodiment 1 of the present invention;
- FIG. 4: is a diagram showing a relation between a motion determination index value and a sensitivity parameter, the relation being set according to variations in the distance from the monitoring camera in accordance with Embodiment 1 of the present invention to a target area, wherein
- FIG. 4(a): is a diagram showing a case of using a single sensitivity parameter and
- FIG. 4(b): is a diagram showing a case of using a plurality of sensitivity parameters;
- FIG. 5: is a diagram showing an example of a monitor picture acquired by the monitoring camera in accordance with Embodiment 1 of the present invention;
- FIG. 6: is a flow chart showing operations by the whole of the monitoring system in accordance with Embodiment 1 of the present invention;
- FIG. 7: is a flow chart showing the operation of a motion detector in Embodiment 1 of the present invention;
- FIG. 8: is a diagram showing an example of a monitor picture acquired by a monitoring camera in accordance with Embodiment 2 of the present invention (when a person moves);
- FIG. 9: is a diagram showing an example of determination of the continuity of a motion which is performed by the monitoring camera in accordance with Embodiment 2 of the present invention, wherein
- FIG. 9(a): is a diagram showing a temporal change of the motion determination index value which is caused by an influence of light and
- FIG. 9(b): is a diagram showing a temporal change of the motion determination index value which is caused by a motion of a moving object;
- FIG. 10: is a flow chart showing the operation of a motion detector in Embodiment 2 of the present invention;
- FIG. 11: is a diagram showing an example of a monitor picture acquired by a monitoring camera in accordance with Embodiment 3 of the present invention (when a person and a small animal are staying);
- FIG. 12: is a flow chart showing the operation of a motion detector in Embodiment 3 of the present invention;
- FIG. 13: is a diagram showing an example of a block partitioning method for use in a monitoring camera in accordance with Embodiment 4 of the present invention;
- FIG. 14: is a flow chart showing the operation of a motion detector in Embodiment 6 of the present invention;
- FIG. 15: is a diagram explaining a relation between a reference point and the distance from the reference point to a target area in a monitoring camera in accordance with Embodiment 7 of the present invention, wherein
- FIG. 15(a): is a diagram showing a case in which the reference point is the installation position of the monitoring camera,
- FIG. 15(b): is a diagram showing a case in which the reference point is a position which is the furthest from the monitoring camera, and
- FIG. 15(c): is a diagram showing a case in which the reference point is a position between the installation position of the monitoring camera and the position which is the furthest from the monitoring camera; and
- FIG. 16: is a diagram showing an example of a monitor picture acquired by a monitoring camera in accordance with Embodiment 8 of the present invention, wherein
- FIG. 16(a): is a diagram showing a picture before enlargement and
- FIG. 16(b): is a diagram showing a picture in which a part (a region C) of a zone A shown in FIG. 16(a) is enlarged.

### EMBODIMENTS OF THE INVENTION

Hereafter, the preferred embodiments of the present invention will be explained in detail with reference to the drawings.

### Embodiment 1.

First, problems to be solved by Embodiment 1 will be explained.

In the case of providing only one kind of sensitivity parameter used for performing motion determination, like in the case of a conventional configuration disclosed in Patent Reference 1, there may occur a phenomenon in which it is easily determined (this determination is sometimes referred to as motion detection from here on) that "there is a motion" in a certain region within one picture while it is difficult to determine that "there is a motion" in another region within the picture.

For example, there may occur a phenomenon in which if the sensitivity parameter is set to a single certain value, when, within a picture, a person is moving in a region closer to the monitoring camera and another person is similarly moving in a region farther from the monitoring camera, the motion of the person who is closer to the monitoring camera is easily detected while the motion of the other person who is farther from the monitoring camera is hard to detect.

This is because in the case of using a method of performing motion determination according to the size of a motion, a change state of the pattern of an object, a change state of the pixel level of a target area to be monitored, or the like, the motion of a person who is closer to the monitoring camera is large and hence a fine pattern or the like of the person can be observed while the motion of another person who is farther from the monitoring camera is small and hence a fine pattern or the like of the other person collapses and cannot be observed.

Therefore, while a comparison, as to a region closer to the monitoring camera, between the current picture and the immediately preceding picture shows that there are a large number of differences between them, a comparison, as to a region farther from the monitoring camera, between the current picture and the immediately preceding picture shows that there are a smaller number of differences between them.

As a result, there occurs a phenomenon in which while the motion of a person closer to the monitoring camera is easily detected, the motion of another person farther from the monitoring camera is hard to detect. Therefore, there arises a problem that there is a case in which the motion of a person farther from the monitoring camera is not detected.

In order to solve the above-mentioned problem, there can be considered a method of increasing the sensitivity for motion detection (making it possible to determine that "there is a motion" even though the number of differences is small). However, in this case, there is an increase in the frequency of erroneous detection to determine that "there is a motion" even from a small difference which is not a person's motion.

Further, even when the brightness within a picture changes due to a flicker of a luminaire, reflection or fluctuations of light, or the like, and even when a target has no motion in a partial region within a picture, there is a possibility that the frequency of erroneous detection to determine that "there is a motion" increases due to a change of the signal level.

Further, in order to solve the above-mentioned problem, there can be considered a method of lowering the sensitivity for motion detection (making it possible not to determine that "there is a motion" even though the signal level changes a little). However, in this case, there is an increase in omissions in detection including non-detection of the motion of a person and the motion of a target to be monitored.

Next, a solution in this Embodiment 1 to the above-mentioned problem will be described hereafter.

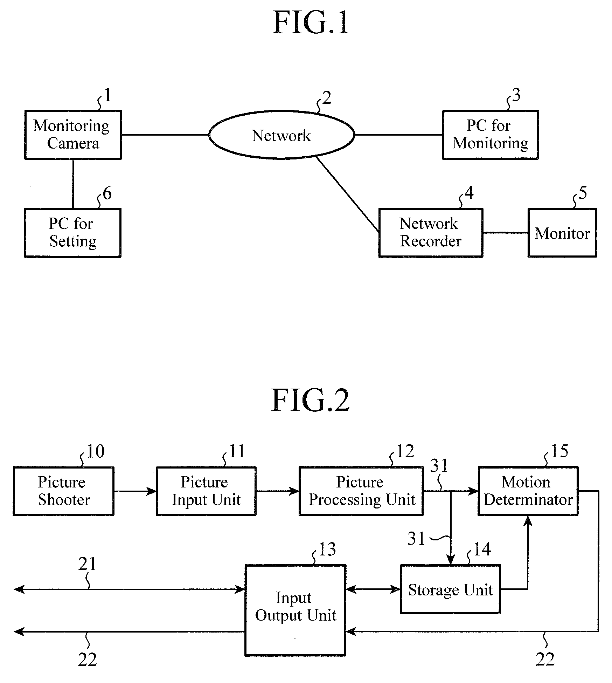

FIG. 1 is a block diagram showing the configuration of the whole of a monitoring system including a monitoring camera 1 in accordance with Embodiment 1 of the present invention. Referring to FIG. 1, reference numeral 1 denotes the monitoring camera, reference numeral 2 denotes a network, reference numeral 3 denotes a PC for monitoring, reference numeral 4 denotes a network recorder, reference numeral 5 denotes a monitor, and reference numeral 6 denotes a PC for setting.

The network 2 can be the Internet, a local network, or another network. The present invention is not limited by the form of the network 2. Further, although the explanation is made in Embodiment 1 with the configuration shown in FIG. 1, the monitoring camera 1, the PC 3 for monitoring and the network recorder 4 can be connected to one another via not the network 2, but a HUB.

As an alternative, the monitoring camera 1 and the network recorder 4 can be connected directly to each other, the monitoring camera 1, the PC 3 for monitoring and the network recorder 4 can be connected directly to one another, or the monitoring camera 1, the network recorder 4 and the PC 3 for monitoring can be connected to one another by using another method.

The present invention is not limited by the form of the connection. More specifically, although the following explanation will be made by assuming that the network recorder 4 is connected via the network 2, the network recorder 4 can be alternatively connected not via the network 2.

The monitoring camera 1, the PC 3 for monitoring and the network recorder 4 are connected to the network 2. A picture acquired by performing shooting on a target area by using the monitoring camera 1 and motion detection information based on that picture (information indicating the result of motion determination, which is also referred to as a motion detection result 22 from here on) are monitored by the PC 3 for monitoring, recorded in the network recorder 4, and displayed by the monitor 5.

Camera settings of the monitoring camera 1 (a setting of a setting parameter 21 which will be described below, and another setting for controlling various operations of the monitoring camera 1) are performed by the PC 6 for setting. Referring to FIG. 1, the PC 6 for setting is connected directly to the monitoring camera 1.

As an alternative, the PC for setting can be connected to the monitoring camera via a HUB or the network 2. Although the explanation will be made hereafter by assuming that the camera settings of the monitoring camera 1 are performed by the PC 6 for setting, the camera settings can be alternatively performed by either the PC 3 for monitoring or the network recorder 4, and the present invention is not limited to those examples.

FIG. 2 is a block diagram showing the configuration of the monitoring camera 1 in accordance with Embodiment 1 of the present invention. Referring to FIG. 2, reference numeral 10 denotes a picture shooter, reference numeral 11 denotes a picture input unit, reference numeral 12 denotes a picture processing unit, reference numeral 13 denotes an input output unit (a detection sensitivity acquirer, an outputter), reference numeral 14 denotes a storage unit, and reference numeral 15 denotes a motion detector. Further, reference numeral 21 denotes the setting parameter, reference numeral 22 denotes the motion detection result, and reference numeral 31 denotes a processed picture.

The picture shooter 10 performs shooting on a target area to be monitored to acquire a picture. The picture acquired by this picture shooter 10 is input to the picture input unit 11. The picture input unit 11 then outputs this picture to the picture processing unit 12, and the picture processing unit 12 performs picture processing on this picture to acquire a processed picture 31.

As the picture processing performed by the picture processing unit 12, a signal level correction, such as a gamma correction, a color correction, a white balance process, a noise reduction process, picture enlargement and reduction, a flicker correction, a sensitization process, an image synthesizing process, edge enhancement, a rendering process, and so on are provided. The picture processing unit performs the picture processing by performing either one of those processes or a combination of two or more of those processes.

As an alternative, the picture processing unit can perform other well-known picture processing or perform picture processing by combining the other well-known picture processing with the above-mentioned processing, and the present invention is not limited to those examples.

Further, the input output unit 13 has a function (the detection sensitivity acquirer) of acquiring the setting parameter 21 from the PC 6 for setting, and causes the storage unit 14 to store the setting parameter 21 acquired thereby. The setting parameter 21 in accordance with Embodiment 1 is the sensitivity parameter (detection sensitivity), for each block, used for making the motion detector 15 perform motion determination. This sensitivity parameter for each block will be described below.

When the setting parameter 21 is read from the monitoring camera 1 to outside the monitoring camera, the input output unit 13 reads the setting parameter 21 stored in the storage unit 14 and outputs that setting parameter 21 to the PC 6 for setting or the PC 3 for monitoring.

Further, while the processed picture 31 acquired by the picture processing unit 12 is output, as an input picture for the motion determination, to the motion detector 15, the processed picture is output, as a reference picture for the motion determination which will be performed the next time or later, to the storage unit 14. The storage unit 14 stores and manages the processed picture 31 (the reference picture) input thereto in the input order (in time order).

The motion detector 15 reads the setting parameter 21 (the sensitivity parameter for each block) stored in the storage unit 14 first. The motion detector 15 also acquires, as the input picture, the processed picture 31 from the picture processing unit 12, and acquires, as the reference image, a processed picture 31 (this picture can be a processed picture 31 of an immediately preceding frame) which precedes in time that input picture from the storage unit 14.

The motion detector 15 has a function (a block partitioner) of partitioning each of the input and reference pictures which are acquired thereby into a plurality of blocks, and partitions each of those input and reference pictures into a plurality of blocks.

The motion detector 15 then performs the motion determination on each of the blocks according to the corresponding sensitivity parameter read thereby by using the input picture and the reference image which are partitioned.

A motion detection result 22 acquired by this motion detector 15 is output to the input output unit 13 and is also output to the PC 3 for monitoring by the input output unit (the outputter) 13.

In Embodiment 1, the pictures output from the picture processing unit 12 and the storage unit 14 to the motion detector 15 are the current input picture and the reference picture used for performing the motion determination. The reference picture can be a processed picture 31 input immediately before the input picture, or can be another processed picture 31 already input at a time different from the time when the processed picture 31 is input immediately before the input picture.

More specifically, the reference picture has only to be a processed picture 31 which can be used for performing the motion determination. The present invention is not limited to those examples.

Further, in FIG. 2, the case in which the input picture is output from the picture processing unit 12 directly to the motion detector 15 is shown. In contrast with this, instead of outputting the input picture from the picture processing unit 12 directly to the motion detector 15, the input picture and the reference picture can be output from the storage unit 14 to the motion detector 15. More specifically, the input picture and the reference image have only to be input to the motion detector 15, and the present invention is not limited to those examples.

Further, although it is assumed in Embodiment 1 that the partitioning of each of the input and reference pictures into blocks is performed by the motion detector 15, the function (the block partitioner) can be alternatively disposed in the storage unit 14. As an alternative, the function (the block partitioner) of partitioning the input picture into blocks can be disposed in the picture processing unit 12.

More specifically, what is necessary is just to be able to carry out the block partitioning in such a way that the motion determination can be performed on each block, and the present invention is not limited by the functional unit to partition each of the pictures into blocks and the block partitioning method. Further, the state of the block partitioning (e.g., the number of blocks after the partitioning, and the range of each block) can be notified to the PC 6 for setting or the PC 3 for monitoring via the input output unit 13.

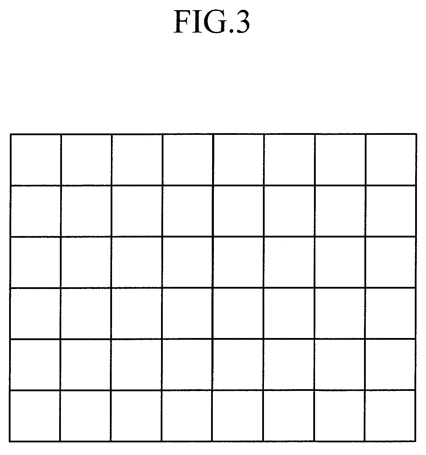

FIG. 3 is a diagram showing the picture partitioning for the motion determination. FIG. 3 shows a case in which a picture is partitioned into 48 blocks. The motion detector 15 performs the motion determination on each of these blocks after the partitioning.

Although a picture is partitioned into 48 blocks in the example shown in FIG. 3, a picture can be alternatively partitioned into 12 blocks, 16 blocks, 100 blocks, or an arbitrary number of blocks, and the present invention is not limited to those examples.

The target which is partitioned into blocks having a uniform size is assumed to be one frame which constructs one screen. Further, in the case in which one frame consists of two fields, like in the case of an interlaced picture, one frame can be partitioned into blocks having a uniform size or each of the fields can be partitioned into blocks having a uniform size, and the present invention is not limited to those examples.

Although multiple frames can be handled as a group and partitioned into blocks having a uniform size, the memory capacity to store blocks required to perform the motion determination can be reduced through the partitioning of each frame or each field into blocks having a uniform size, as compared with a case of storing the blocks of multiple frames.

Further, the sensitivity parameter used for the motion determination by the motion detector 15 is a parameter used for determining the presence or absence of a motion, with respect to a motion determination index value calculated from the input picture and the reference picture. As the motion determination index value, for example, the number of pixels each of which is determined, from a comparison between the input picture and the reference picture, to have a difference between them is used.

At that time, a change of each pixel between the input picture and the reference picture is calculated by, instead of tracing to which coordinates the pixel in question has moved, calculating a change of the pixel value at the same coordinates in the same block. As a result, the presence or absence of a motion can be determined for the block in question. More specifically, instead of determining how each pixel in an object which is a target has moved, whether or not a moving target is staying in the block in question is determined.

In the trace determination of an object, a memory that stores frames within a time period which is the target for tracing is needed. In contrast with this, in the case of using the method of determining whether or not a moving target is staying in the block in question, only a memory that stores a reference picture corresponding to the input picture is needed and the memory capacity can be reduced as compared with the trace determination of an object.

Further, in the case of detection of a suspicious person, while it is important to detect how a suspicious person has moved, it is important to perform determination of whether or not a suspicious person is staying (there is a moving target in the block in question) and determination of the presence or absence of a suspicious person can be performed with a relatively smaller memory capacity.

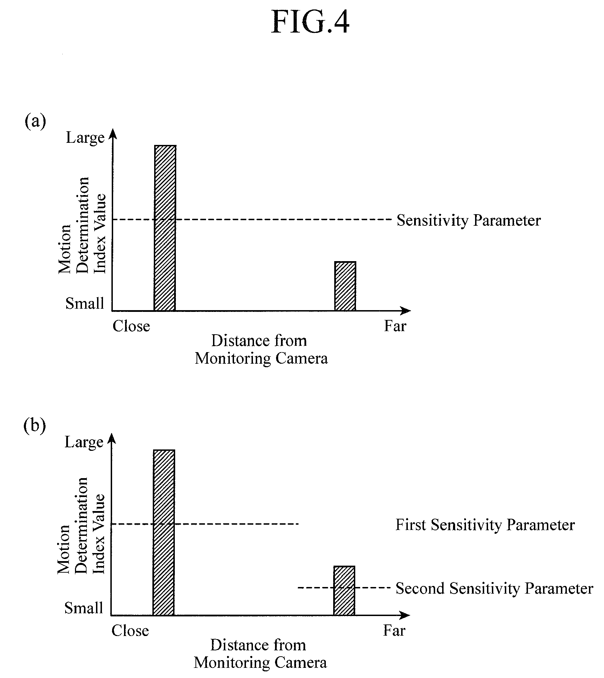

FIG. 4 is a diagram showing a relation between the motion determination index value and the sensitivity parameter, the relation being set according to variations in the distance from the monitoring camera 1 to a target area (the distance to the target area with the installation position of the monitoring camera 1 being defined as a reference point), and FIG. 4(a) is a diagram showing a case of using a single sensitivity parameter and FIG. 4(b) is a diagram showing a case of using a plurality of sensitivity parameters.

As shown in FIG. 4, there is a tendency that, even when persons are moving similarly, the motion determination index value becomes large for a person who is moving in a region closer to the monitoring camera 1, while the motion determination index value becomes small for another person who is moving in a region farther from the monitoring camera 1.

Hereafter, a case will be considered in which the motion detector 15 determines that "there is a motion" when the motion determination index value is equal to or greater than a sensitivity parameter, whereas the motion detector determines that "there is no motion" when the motion determination index value is less than the sensitivity parameter.

At that time, if performing the motion determination on a picture by using a single sensitivity parameter, as shown in FIG. 4(a), the motion detector determines that, as to the motion determination index value acquired for an object closer to the monitoring camera 1, "there is a motion", while the motion detector determines that, as to the motion determination index value acquired for an object farther from the monitoring camera 1, "there is no motion."

To solve this problem, in accordance with the present invention, as shown in FIG. 4(b), for each picture, sensitivity parameters (first and second sensitivity parameters) which are different between a region closer to the monitoring camera 1 and a region farther from the monitoring camera 1 are set.

As a result, when persons are moving similarly, not only as to the motion determination index value acquired for a person moving in a region closer to the monitoring camera 1, but also as to the motion determination index value acquired for another person moving in a region farther from the monitoring camera 1, the motion detector can determine that "there is a motion" according to the value.

As mentioned above, in accordance with the present invention, in order to perform the motion determination in consideration of the difference in the detection sensitivity, the difference being dependent upon the distance from the monitoring camera 1 to the target area, the motion detector 15 (the block partitioner) partitions each picture into a plurality of blocks and the PC 6 for setting sets a sensitivity parameter for each of the blocks.

At that time, the PC 6 for setting sets the sensitivity parameter according to the distance between the target area in each of the blocks and the monitoring camera 1. More specifically, because it is difficult to detect the motion of a target staying farther from the monitoring camera 1 as compared with that of a target staying closer to the monitoring camera 1, the PC 6 for setting sets the sensitivity parameter for a region farther from the monitoring camera 1 to a value which makes it easier to detect a motion, as compared with the sensitivity parameter for a region closer to the monitoring camera.

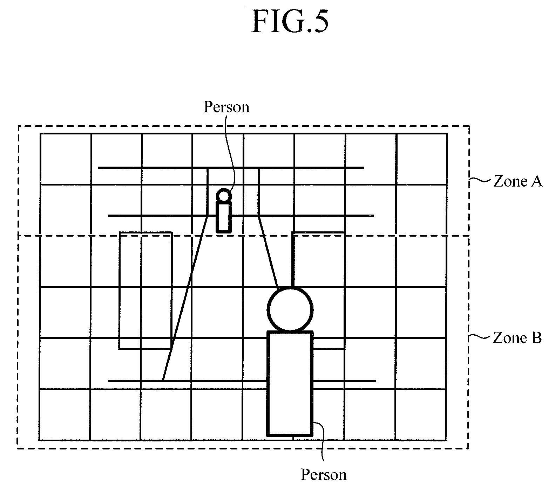

FIG. 5 is a diagram showing an example of a monitor picture acquired by the monitoring camera 1. In the example shown in FIG. 5, in the picture, a person is seen in a region (a zone B) closer to the monitoring camera 1 and another person is seen in a region (a zone A) farther from the monitoring camera 1. In this case, the PC for setting sets the sensitivity parameter for each block included in the zone A to a value which makes it easier to detect a motion (in such a way as to increase the sensitivity), as compared with the sensitivity parameter for each block included in the zone B. As a result, a situation in which it is difficult to detect the motion of a person staying farther from the monitoring camera 1 can be eliminated.

The zones A and B in the example shown in FIG. 5 can be set up by a user by making a judgment on the basis of the angle of view of the monitoring camera 1 to perform a zone division, or can be determined by the monitoring camera 1 by using an automatic distance measurement method to measure distances and perform a zone division, and the present invention is not limited to those examples.

Further, the PC 6 for setting can set the sensitivity parameter according to an influence of light (the presence or absence of a flicker, fluctuations or the like of light) upon each block. At that time, the PC 6 for setting sets the sensitivity parameter for a block in which, for example, a fluorescent lamp is seen in the picture to a value which makes it difficult to detect a motion (in such a way as to lower the sensitivity) as compared with the sensitivity parameter for a block in which no fluorescent lamp is seen in the picture.

Further, the PC 6 for setting sets the sensitivity parameter for a block in which, for example, reflected light from a luminaire is seen in the picture to a value which makes it difficult to detect a motion (in such a way as to lower the sensitivity) as compared with the sensitivity parameter for a block in which no reflected light from a luminaire is seen in the picture.

Further, also when no fluorescent lamp is seen in the picture, but a light source having an influence (erroneous detection) upon motion detection due to a flicker or fluctuations of light is seen in the picture, the PC for setting sets the sensitivity parameter for a block in which that light source is seen in the picture to a value which makes it difficult to detect a motion as compared with the sensitivity parameter for a block in which that light source is not seen in the picture, in the same way as above.

As mentioned above, even in a case in which the picture contains a region in which erroneous detection of a motion may be performed under the influence of light, by setting the sensitivity parameter for each block in that region to a value which makes it difficult to detect a motion, erroneous detection can be suppressed.

In this case, although the detection accuracy decreases only in such a block as above, when a target to be monitored (e.g., a person) has a size extending over a plurality of blocks, detection of the motion of the target can be performed in blocks other than that block.

In Embodiment 1, the case in which the setting parameter 21 set by the PC 6 for setting is a sensitivity parameter used for performing the motion determination is shown. In contrast with this, the PC 6 for setting can alternatively set an immediate sensitivity parameter for each block which is a unit for the motion determination within the picture.

As an alternative, the PC 6 for setting can set both a base sensitivity parameter which is a base for the entire picture, and a sensitivity offset for each block which is a unit for the motion determination, and the monitoring camera 1 (the motion detector 15) can calculate the sensitivity parameter for each block on the basis of those base sensitivity parameter and sensitivity offset.

Further, the PC 6 for setting can set the sensitivity parameter by performing a grouping setting (a zone setting) or the like. As an alternative, the PC 6 for setting or the network recorder 4 can perform camera settings and the monitoring camera 1 can perform the motion determination.

More specifically, the value of the sensitivity parameter can be arbitrary as long as the sensitivity parameter has a value which makes it possible to perform the motion determination, and the method of setting the sensitivity parameter does not limit the present invention.

The PC 6 for setting or the network recorder 4 can alternatively perform camera settings and the network recorder 4 can alternatively receive the picture acquired by the monitoring camera 1 and perform the motion determination on the basis of the picture input thereto, and the device that performs camera settings and the device that performs the motion determination do not limit the present invention. An example of the configuration of the network recorder 4 in the case of inputting the picture acquired by the monitoring camera 1 to the network recorder 4, and performing the motion determination by means of the network recorder 4 on the basis of the input picture will be explained by using FIG. 2.

In this case, the network recorder 4 has only to have, for example, the input output unit 13 having the function (the detection sensitivity acquirer) of acquiring the setting parameter, the storage unit 14 that stores the setting parameter, the motion detector 15 and the input output unit 13 that outputs a motion detection result, which are shown in FIG. 2. As an alternative, the picture acquired by the monitoring camera 1 can be input to the PC 3 for monitoring, and the PC 3 for monitoring can perform the motion determination on the basis of the picture input thereto.

In this case, the PC 3 for monitoring has only to have, for example, the input output unit 13 having the function (the detection sensitivity acquirer) of acquiring the setting parameter, the storage unit 14 that stores the setting parameter, the motion detector 15 and the input output unit 13 that outputs a motion detection result, which are shown in FIG. 2.

In the case in which the monitoring camera 1 (the motion detector 15) calculates the sensitivity parameter for each block on the basis of the base sensitivity parameter and the sensitivity offset, the monitoring camera can calculate the sensitivity parameter for each block by adding or subtracting the sensitivity offset to or from the base sensitivity parameter.

As an alternative, the monitoring camera can calculate the sensitivity parameter for each block by multiplying or dividing the base sensitivity parameter by the sensitivity offset (a coefficient).

As an alternative, the monitoring camera can calculate the sensitivity parameter for each block by performing an arbitrary arithmetic operation, other than the above-mentioned arithmetic operations, on the base sensitivity parameter and the sensitivity offset, and the present invention is not limited to those examples.

For example, when the arithmetic operation is expressed by a function f(x, y) (in this function, x: the base sensitivity parameter, y: the sensitivity offset), and the function is one of the four operations of arithmetic, the function is given by either one of the following equations: (1) the calculated sensitivity = the base sensitivity parameter + the sensitivity offset; (2) the calculated sensitivity = the base sensitivity parameter - the sensitivity offset; (3) the calculated sensitivity = the base sensitivity parameter x the sensitivity offset; and (4) the calculated sensitivity = the base sensitivity parameter € the sensitivity offset.

As an alternative, when the function is an exponential function (f(x, y) =x^y) (the (sensitivity offset)-th power of the base sensitivity parameter), the function is given by the calculated sensitivity = the base sensitivity parameter^the sensitivity offset.

As an alternative, the function can be f(x, y) = x + 3y + 2, f(x, y) = x × 2y - 1, or another one. The function can be alternatively a sensitivity parameter which is updated by performing an arithmetic operation (a function arithmetic operation) based on the base sensitivity parameter and the sensitivity offset, or an arithmetic operation (i.e., f(x, y) = x) which yields the calculated sensitivity equal to the base sensitivity parameter.

In Embodiment 1, the sensitivity parameter is set as a parameter used for performing the motion determination on the motion determination index value which is calculated on the basis of the input picture and the reference picture. However, the sensitivity parameter can have an arbitrary range of values or an arbitrary value as long as the sensitivity parameter is a one used for performing the motion determination, and the present invention is not limited to those examples.

As a concrete example of the case in which the sensitivity parameter has a range of values, there is a case in which it is determined that "there is a motion" when the motion determination index value is equal to or greater than a first value or equal to or less than a second value, or the like. In this case, the first and second values can be set as the sensitivity parameter, or a range (a belt-like range) less than the first value and greater than the second value can be set as the sensitivity parameter.

Further, the sensitivity parameter can have a value which is used for the processing on one screen or one frame, or the same sensitivity parameter can be used for the processing on subsequent screens (a plurality of screens in the time axis direction) or subsequent frames (a plurality of frames in the time axis direction) until a change is made to the sensitivity parameter.

Further, in Embodiment 1, the case in which the motion determination index value is defined to be the number of pixels each of which is determined, from a comparison between the input picture and the reference picture, to have a difference between them is shown.

In contrast with this, the sum total (the difference absolute value sum) of the differences in the values of pixels between the input picture and the reference picture (the differences in the pixel values at the same pixel positions) can be alternatively defined as the motion determination index value.

As an alternative, each of the input and reference pictures can be partitioned into blocks, and the differences (the difference absolute value sum) in the values of pixels between the input picture and the reference picture in each block can be defined as the motion determination index value.

Further, the differences in the pixel values can be the differences in luminance signals or the differences in chrominance signals. As an alternative, the difference in edge component which is acquired through calculation of edge components can be defined as the motion determination index value.

The calculation of edge components can be performed by using any of well-known methods or any combination of two or more of those methods. More specifically, the motion determination index value can be arbitrary as long as the motion determination index value shows the difference in picture feature between the input picture and the reference picture, and the present invention is not limited to those examples.

Thus, when the motion determination index value is determined to be an index value showing the difference in picture feature between the input picture and the reference picture, what is necessary is just to set the sensitivity parameter for a region farther from the monitoring camera 1 to a value lower than the sensitivity parameter for a region closer to the monitoring camera. As a result, a motion in a region farther from the monitoring camera can be detected more easily as compared with that in a region closer to the monitoring camera.

When partitioning each picture into blocks, only a region which is a target for the motion determination within the picture can be partitioned into blocks and each of the blocks can be set as a target for the motion determination.

Further, a specified block in the blocks into which the picture is partitioned can be set to be a determination exclusion block which is not a target for the motion determination. More specifically, what is necessary is just to be able to carry out the motion determination on each block which is a target for the motion determination, and the present invention is not limited to those examples.

For example, a central portion of each picture and a peripheral portion surrounding the central portion can be set as a target for the motion determination, and right and left edge portions and upper and lower edge portions of the picture can be set as an outside of the target for the motion determination. Further, some of the blocks for the motion determination into which the picture is partitioned can be set as an outside of the target for the motion determination (a so-called masked region).

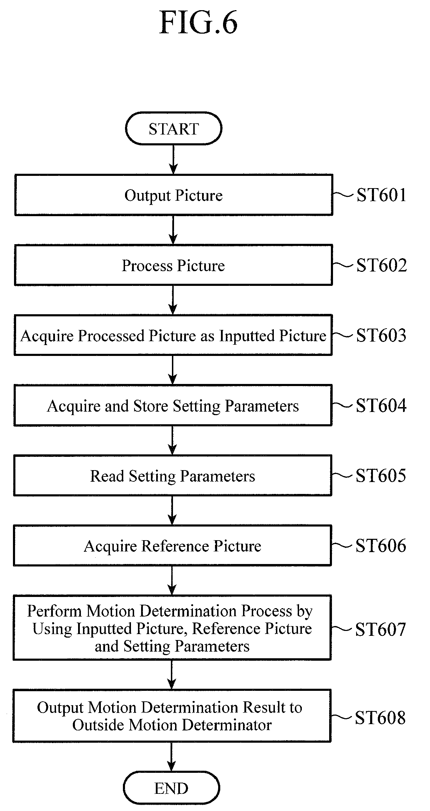

Next, the operation of the monitoring system configured as above will be explained. FIG. 6 is a flow chart showing the operation of the whole of the monitoring system in accordance with Embodiment 1 of the present invention. The operation of the monitoring camera 1 will be explained hereafter.

The monitoring camera 1 can shoot a video and output a picture and the network recorder 4 and the PC 3 for monitoring can perform subsequent processes, and the PC 6 for setting and the network recorder 4 can perform camera settings. The present invention is not limited to that example.

In the operation of the whole of the monitoring system, first, the picture input unit 11, in step ST601, receives the picture (a picture signal or picture data) which the picture shooter 10 has acquired by performing shooting on a target area, and outputs the picture to the picture processing unit 12.

The picture processing unit 12 then, in step ST602, acquires a processed picture 31 by performing the picture processing on the input picture. The picture processing unit 12 then outputs the processed picture 31 acquired thereby to the storage unit 14 and the motion detector 15.

The motion detector 15 then, in step ST603, acquires, as an input picture, the processed picture 31 from the picture processing unit 12.

The input output unit 13 then, in step ST604, acquires the setting parameter 21 from the PC 6 for setting, and causes the storage unit 14 to store the setting parameter. Instead of storing the setting parameter 21 acquired by the input output unit 13 in the storage unit 14, the input output unit can output the setting parameter directly to the motion detector 15.

The motion detector 15 then, in step ST605, reads the setting parameter 21 stored in the storage unit 14.

In a case in which the base sensitivity parameter is stored in advance in the storage unit 14, and the setting parameter 21 acquired by the input output unit 13 is the sensitivity offset set for each block, the motion detector 15 reads those base sensitivity parameter and sensitivity offset.

When no input of the sensitivity offset set for each block is performed, the motion detector can alternatively read only the base sensitivity parameter. The motion detector 15 can alternatively hold the base sensitivity parameter in advance.

The motion detector 15 then, in step ST606, acquires, as the reference picture, a processed picture 31 which has been input to and stored in the storage unit 14 (a preceding frame) before in time the processed picture 31 (the input picture) acquired in step ST603.

The motion detector 15 then, in step ST607, performs the motion determination process by using the input picture acquired in step ST603, the reference picture acquired in step ST606, and the setting parameter 21 read in step ST605.

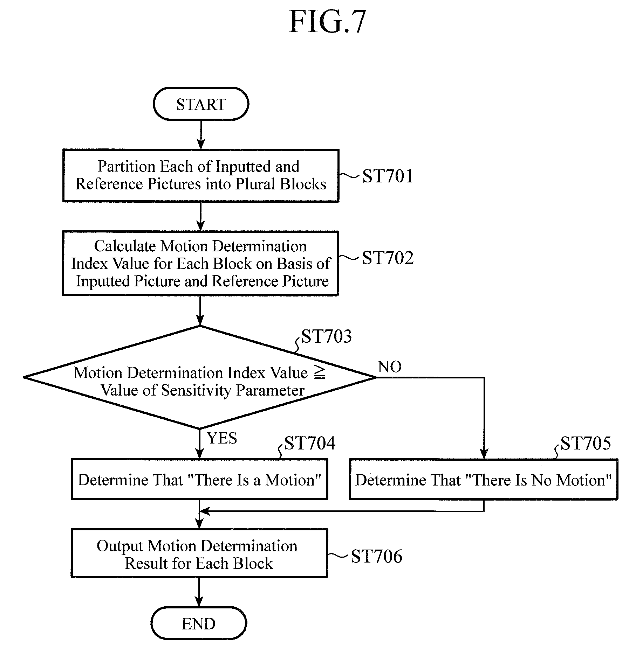

The motion detection result 22 acquired by this motion detector 15 is output to the input output unit 13. A detailed explanation of the motion determination process performed by the motion detector 15 will be made below by using FIG. 7.

The input output unit 13 then, in step ST608, outputs the motion detection result 22 acquired by the motion detector 15 to the PC 3 for monitoring. The input output unit 13 can be alternatively configured in such a way as to, only when the motion detection result 22 shows that "there is a motion", output the motion detection result 22 to the PC 3 for monitoring.

Next, the motion determination process performed by the motion detector 15 will be explained by using FIG. 7. Hereafter, the case in which the motion detector acquires, as the setting parameter 21, the sensitivity parameter set for each block from the storage unit 14 will be shown.

In the motion determination process by the motion detector 15, the motion detector first, in step ST701, partitions each of the input and reference pictures into a plurality of blocks. As an alternative, the partitioning of each of the input and reference pictures into a plurality of blocks can be performed by either the picture processing unit 12 or the storage unit 14.

In that case, the motion detector 15 acquires the input picture on which the block partitioning is performed and the reference picture on which the block partitioning is performed. The motion detector 15 can be further configured in such a way as to read data about each block from either the picture processing unit 12 or the storage unit 14 (addressing).

The motion detector then, in step ST702, calculates the motion determination index value for each block on the basis of the input picture and the reference picture.

Next, the motion detector, in step ST703, performs the motion determination. As a concrete example, the motion detector determines whether or not the motion determination index value is equal to or greater than the corresponding sensitivity parameter for each block.

At that time, when the motion determination index value is equal to or greater than the corresponding sensitivity parameter, the motion detector shifts to step ST704 and determines that "there is a motion." In contrast, when the motion determination index value is less than the corresponding sensitivity parameter, the motion detector shifts to step ST705 and determines that "there is no motion."

The motion detector then, in step ST706, outputs the motion detection result 22 to the input output unit 13 on a per block basis. The motion detector can be alternatively configured in such a way as to, only when the motion detection result 22 shows "there is a motion", output that motion detection result 22.

As mentioned above, because the monitoring system in accordance with this Embodiment 1 is configured in such a way as to change and set the sensitivity parameter for each block according to a motion detection condition dependent upon the distance from the monitoring camera 1 of the monitoring system to the target area, a motion detection condition dependent upon the influence of light within the picture, etc., and to perform the motion determination on each block, the monitoring system can prevent erroneous motion detection and omissions in motion detection in each of blocks into which the picture is partitioned, with a simple and low-cost configuration.

As a result, the monitoring camera 1 can be prevented from providing an erroneous warning and omitting any warning.

Further, because the monitoring camera 1 of the monitoring system performs the motion determination by using the sensitivity parameter different for each block, a plurality of monitoring stations (PCs for monitoring 3) do not have to be disposed, unlike in the case of using a conventional technology, and therefore the cost required to configure the monitoring system can be reduced.

Further, the number of blocks into which the picture is partitioned is not limited to the order of monitoring stations. Further, because the monitoring system performs the motion determination by using the sensitivity parameter different for each block, any transfer of large-volume data from the monitoring camera 1 to any monitoring station becomes unnecessary.

Further, in the example shown in FIG. 3, the picture is partitioned into blocks having a uniform size. In this case, blocks having a uniform size satisfy at least one of, for example, the following conditions: (1) the number of pixels contained in each block is the same; (2) the number of pixels in a vertical direction contained in each block is the same and the number of pixels in a horizontal direction contained in each block is the same, where the number of pixels in a vertical direction may differ from the number of pixels in a horizontal direction; and (3) the shape and the size of each block is congruent (the shape includes a shape which is not a rectangle).

Blocks having a uniform size can be alternatively defined according to another condition other than the above-mentioned conditions, and the present invention is not limited to those examples.

Through the partitioning of the picture into blocks having a uniform size, the control of the motion determination on each block is facilitated. This is because the motion determination index value calculated for each block can be compared with the motion determination index value calculated for another block through the partitioning of the picture into blocks having a uniform size (the motion determination index value has only to be a value indicating a pixel feature of the corresponding block by using pixel value information about the inside of the block, such as the sum total, the multiplication or the accumulation of the pixel values in the block, and each pixel value has only to be a luminance signal value, a chrominance signal value or an RGB signal value of the corresponding pixel, or another value indicating the corresponding pixel).

More specifically, as to blocks in a region close to the monitoring camera 1, whether or not there is a motion is determined by using the same sensitivity parameter. On the other hand, there is a case in which if the distance from the monitoring camera 1 differs, even though objects have the same motion, the motion determination index values acquired for corresponding blocks are different from each other.

Although the motion determination index value is made to differ according to the difference in the distance from the monitoring camera 1 through the partitioning of the picture into blocks having a uniform size, the partitioning into blocks having a uniform size makes it easy to set the sensitivity parameter according to the difference in the distance from the monitoring camera 1.

Therefore, for blocks in which the motion determination index values differ according to the difference in the distance from the monitoring camera 1, among the blocks having a uniform size into which the picture is partitioned,
the motion determination is performed by using different sensitivity parameters, respectively. As a result, even when the distance from the monitoring camera 1 differs, the motion determination can be performed on similar motions of objects.

For example, when the speed at which a person is walking in a region closer to the monitoring camera 1 is the same as the speed at which another person is walking in a region farther from the monitoring camera 1 within the screen, the motion of the person walking in the region closer to the monitoring camera 1 is observed, within the screen, to be a motion which is relatively larger than the motion of the other person walking in the region farther from the monitoring camera 1.

Therefore, the sensitivity parameter is specified independently according to the difference in the distance from the monitoring camera 1. As a result, it can be determined for both blocks showing the region closer to the monitoring camera 1 and blocks showing the region farther from the monitoring camera 1 that "there is a motion."

If the same sensitivity parameter is specified for any of the blocks having a uniform size irrespective of the distance from the monitoring camera 1, there may be a case in which, for example, it is determined for blocks showing the region closer to the monitoring camera 1 that "there is a motion," while the motion index value becomes small relatively for blocks showing the region farther from the monitoring camera 1, and it is determined for the blocks that "there is no motion."

In contrast with this, by specifying the sensitivity parameter independently according to the difference in the distance from the monitoring camera 1, as mentioned above, the presence or absence of a motion of an object within each block can be determined.

### Embodiment 2

First, a problem to be solved by Embodiment 2 will be explained. The basic configuration of a monitoring camera 1 in accordance with Embodiment 2 is the same as that of the monitoring camera 1 in accordance with Embodiment 1 shown in FIG. 2, and the explanation will be made by focusing on a different portion.

Although the following explanation will be made by focusing on a case in which the monitoring camera 1 performs motion determination, also in the case of Embodiment 2, a picture acquired by the monitoring camera 1 can be input to a network recorder 4 and the network recorder 4 can alternatively perform motion determination on the basis of the picture input thereto, like in the case of Embodiment 1.

Further, also in the case of Embodiment 2, the picture acquired by the monitoring camera 1 can be alternatively input to a PC 3 for monitoring and the PC 3 for monitoring can alternatively perform motion determination on the basis of the picture input thereto, like in the case of Embodiment 1.

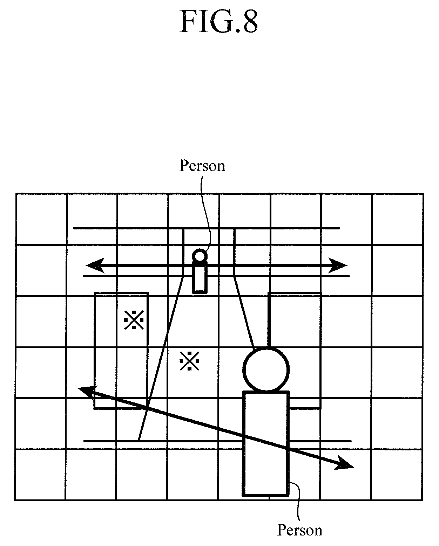

In Embodiment 1, a motion detector 15 performs the motion determination on the basis of the input picture and a reference picture which are acquired from a picture processing unit 12 and a storage unit 14. When a person is moving as shown in FIG. 8, there exist, within a certain frame time period, a time period during which the person's motion is continuing without stopping momentarily, and a time period during which the person stops its motion and is at rest.

On the other hand, as shown by "*" in the picture of FIG. 8, there may be a flicker or fluctuations of light on the floor due to reflection from a luminaire, or the like, or blinking of a light source such as an LED mounted in equipment.

In the case of using a method of determining whether or not there is a motion from a signal change in such a situation, it may be determined erroneously that "a motion is detected" on the basis of a signal change, when only a single set of an input picture and a reference picture is used to perform the motion determination.

To solve this problem, in accordance with Embodiment 2, the motion detector 15 determines whether or not there is a block in which a motion has continued for a set time period. Concretely, the motion detector 15 stores, as a primary detection result, a detection result acquired through the motion determination using a sensitivity parameter shown in Embodiment 1, and performs secondary motion determination of determining whether or not there is a block which is determined in the primary detection result to be a one, in consecutive frames, in which "there is a motion."

This process is aimed at suppressing erroneous detection in the motion detection in an environment in which erroneous detection may occur in the motion detection due to a flicker, fluctuations, or the like of light from a luminaire or the like.

When there is a block which is determined in the primary detection result to be a one, in consecutive frames, in which "there is a motion", that motion detection shows that the motion is a one of a moving object such as a person, and makes it possible to distinguish the motion from a flicker and fluctuations of light and blinking of a light source.

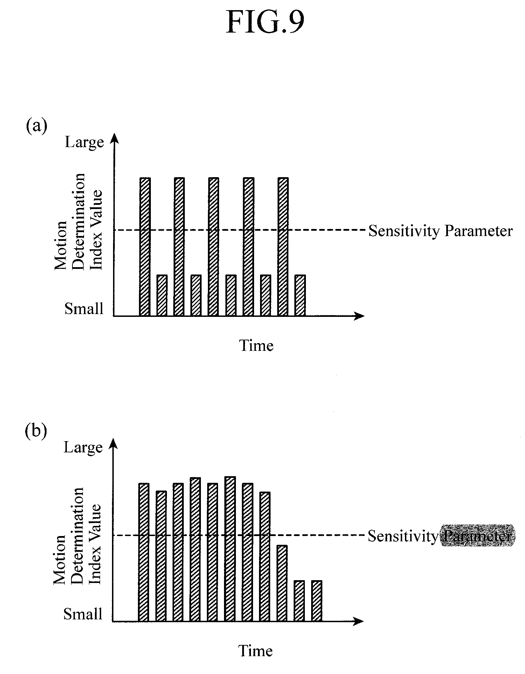

FIG. 9 is a diagram showing an example of determination of the continuity of a motion which is performed by the monitoring camera 1 in accordance with Embodiment 2 of the present invention, and FIG. 9(a) shows a temporal change of the motion determination index value which is caused by an influence of light and FIG. 9(b) is a diagram showing a temporal change of the motion determination index value which is caused by a motion of a moving object.

A moving object, such as a person, an animal, a car or a train, has continuity in its motion. Therefore, as shown in FIG. 9(b), when a moving object is moving, its motion determination index value keeps a large value in the meantime, but when the moving object stops its motion and is at rest, the motion determination index value becomes small in the meantime. In contrast, in the case of a flicker or fluctuations of light from a luminaire or the like, its motion determination index value becomes large or small during a short time period, as shown in FIG. 9(a).

Therefore, for example, a consecutive frame number is used as a criterion (a set time period) by which to determine whether or not there is continuity in a motion, as shown in FIG. 9. When the consecutive frame number is set to 3, because the time period during which the motion determination index value in each block which is a target for the determination is equal to or greater than a sensitivity parameter corresponds to every other frame, not every three or more consecutive frames, in the example of FIG. 9(a), it is determined that there is no continuity in the motion (there is no motion).

In contrast, because the time period during which the motion determination index value in each block which is a target for the determination is equal to or greater than the sensitivity parameter corresponds to eight consecutive frames, i.e., three or more consecutive frames, in the example of FIG. 9(b), it is determined that there is continuity in the motion (there is a motion). By thus determining whether or not there is continuity in time in the motion determination index value according to the consecutive frame number, whether or not a motion is a one of a moving object can be determined.

Although the case in which the consecutive frame number is set to 3 is shown in the example of FIG. 9, the consecutive frame number can be arbitrary as long as the number has a value which makes it possible to perform the motion determination on a moving object, and the present invention is not limited to that example.

Further, although the case in which the consecutive frame number is used is as the criterion (the set time period) by which to determine whether or not there is continuity in time in the motion determination index value is shown in the example of FIG. 9, a unit time can be alternatively used and the present invention is not limited to those examples.

Further, information showing the consecutive frame number can be acquired, as a setting parameter 21, from a PC 6 for setting by an input output unit 13 (a set time period acquirer). As an alternative, the PC 6 for setting can set the consecutive frame number according to the presence or absence of an influence of light.

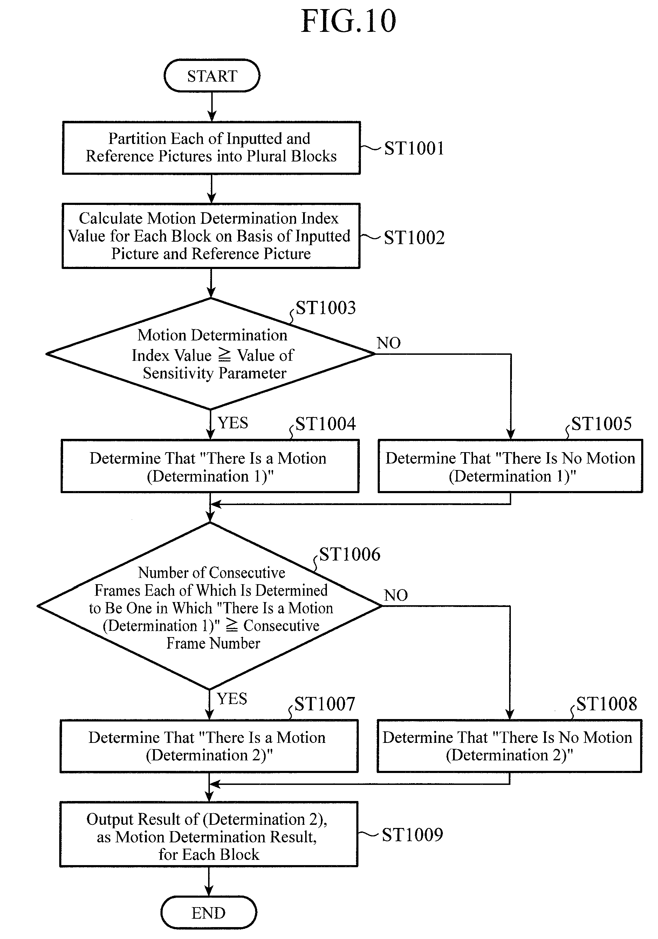

Next, the motion determination process performed by the motion detector 15 in accordance with Embodiment 2 will be explained by using FIG. 10. Hereafter, a case in which the motion detector acquires a setting parameter 21 (a sensitivity parameter) from the storage unit 14 will be shown.

In the motion determination process by the motion detector 15, the motion detector first, in step ST1001, partitions each of input and reference pictures into a plurality of blocks. As an alternative, the partitioning of each of the input and reference pictures into a plurality of blocks can be performed by either the picture processing unit 12 or the storage unit 14.

In that case, the motion detector 15 acquires the input picture on which the block partitioning is performed and the reference picture on which the block partitioning is performed. The motion detector 15 can be further configured in such a way as to read data about each block from either the picture processing unit 12 or the storage unit 14 (addressing).

The motion detector then, in step ST1002, calculates the motion determination index value for each block on the basis of the input picture and the reference picture.

Next, the motion detector, in step ST1003, performs primary motion determination. As a concrete example, the motion detector determines whether or not the motion determination index value is equal to or greater than the corresponding sensitivity parameter for each block, like that in accordance with Embodiment 1. When the motion determination index value is equal to or greater than the corresponding sensitivity parameter, the motion detector shifts to step ST1004 and determines that "there is a motion (determination 1)." In contrast, when the motion determination index value is less than the corresponding sensitivity parameter, the motion detector shifts to step ST1005 and determines that "there is no motion (determination 1)."

Next, the motion detector, in step ST1006, performs secondary motion determination. As a concrete example, the motion detector determines whether or not the number of consecutive frames each of which is determined, through the primary motion determination, to be a one in which "there is a motion (determination 1)" is equal to or greater than the set consecutive frame number, on a per block basis.

When the number of consecutive frames each of which is determined as above is equal to or greater than the set consecutive frame number, the motion detector shifts to step ST1007 and determines that "there is a motion (determination 2)." In contrast, when the number of consecutive frames each of which is determined as above is less than the set consecutive frame number, the motion detector shifts to step ST1008 and determines that "there is no motion (determination 2)."

The motion detector then, in step ST1009, outputs the motion detection result 22 acquired through the secondary motion determination to the input output unit 13 on a per block basis. The motion detector can be alternatively configured in such a way as to, only when the motion detection result 22 shows "there is a motion (determination 2)", output that motion detection result 22.

As mentioned above, because the monitoring system in accordance with this Embodiment 2 is configured in such a way as to determine whether or not a block having a motion continuing over a certain number (a set time period) or more of consecutive frames is included in the blocks into which the picture is partitioned, there is provided an advantage of being able to distinguish a motion of a moving object from a flicker and fluctuations of light, blinking of a light source, etc., in addition to the advantages provided by Embodiment 1.

In Embodiment 2, the case in which the secondary motion determination of determining whether or not there is continuity in a motion is performed after the primary motion determination is performed by using the sensitivity parameter for each block is shown. In contrast with this, the monitoring system can alternatively perform only the secondary motion determination without performing the primary motion determination.

Also in the case in which the monitoring system is configured this way, the monitoring system can prevent erroneous motion detection and omissions in motion detection in each of the blocks into which the picture is partitioned, with a simple and low-cost configuration.

### Embodiment 3

The case in which the consecutive frame number (the set time period) is used as the criterion for the secondary motion determination is shown in Embodiment 2. In contrast with this, in Embodiment 3, a case in which a set block number is used as the criterion for the secondary motion determination will be shown.

More specifically, a motion detector 15 performs the secondary motion determination of determining whether or not the number of blocks each of which is determined in the primary detection result to be a one in which "there is a motion" is equal to or greater than the set block number. This process is aimed at identifying the size of each moving object within the picture.

When the number of blocks each of which is determined in the primary detection result to be a one in which "there is a motion" is equal to or greater than the set block number within the picture, the motion detector determines that "there is a motion."

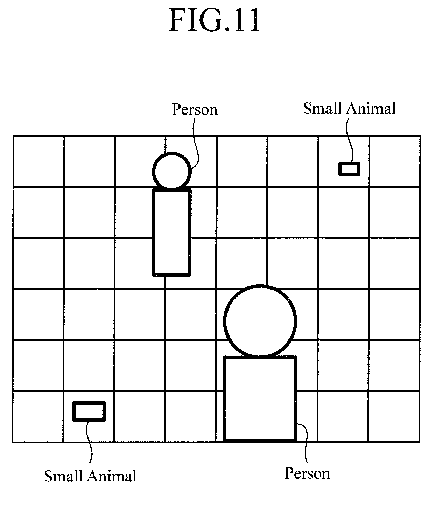

For example, when the size of a person staying within the picture is 4 blocks or more irrespective of its position, and the size of a small animal is 1 block, as shown in FIG. 11, small moving objects, such as the small animal, and persons can be distinguished by setting the set block number to 3.

The basic configuration of a monitoring camera 1 in accordance with Embodiment 3 is the same as that of the monitoring camera 1 in accordance with Embodiment 1 shown in FIG. 2, and the explanation will be made by focusing on a different portion.

Although the following explanation will be made by focusing on a case in which the monitoring camera 1 performs the motion determination, also in the case of Embodiment 3, a picture acquired by the monitoring camera 1 can be input to a network recorder 4 and the network recorder 4 can alternatively perform the motion determination on the basis of the picture input thereto, like in the case of Embodiment 1.

Further, also in the case of Embodiment 3, the picture acquired by the monitoring camera 1 can be alternatively input to a PC 3 for monitoring and the PC 3 for monitoring can alternatively perform the motion determination on the basis of the picture input thereto, like in the case of Embodiment 1.

Further, information indicating the set block number can be acquired, as a setting parameter 21, from a PC 6 for setting by an input output unit 13 (a set block number acquirer). The PC 6 for setting can set the set block number according to the sizes of moving objects to be distinguished.

Although the case in which the set block number is set to 3 is shown in the example of FIG. 11, the set block number based on the number of blocks into which the picture is partitioned or the sizes of moving objects to be distinguished can be arbitrary, and the present invention is not limited to those examples.

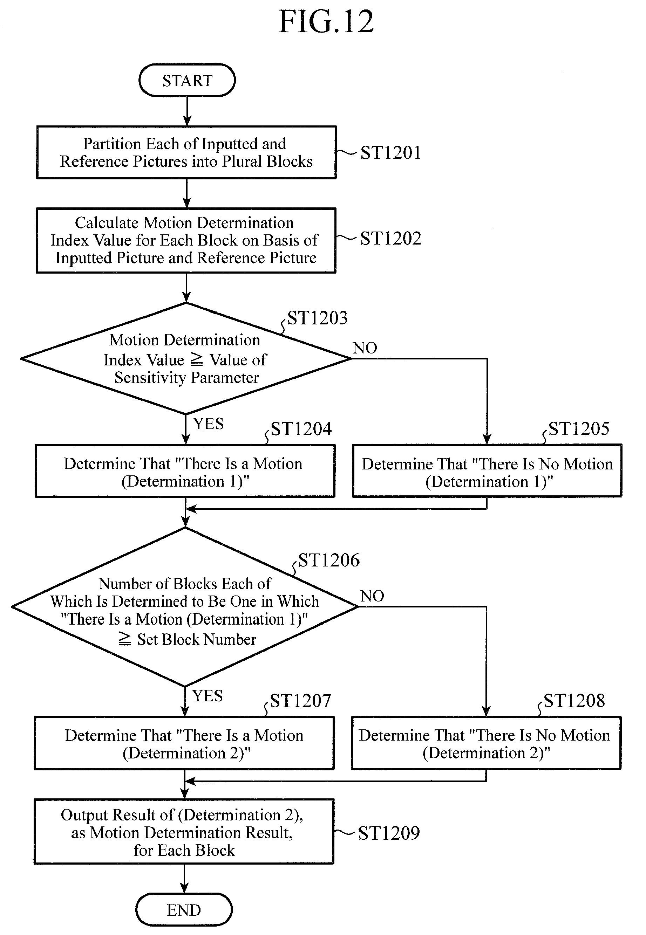

Next, the motion determination process performed by the motion detector 15 in accordance with Embodiment 3 will be explained by using FIG. 12. Hereafter, a case in which the motion detector acquires a setting parameter 21 (a sensitivity parameter) from a storage unit 14 will be shown.

In the motion determination process by the motion detector 15, the motion detector first, in step ST1201, partitions each of input and reference pictures into a plurality of blocks. As an alternative, the partitioning of each of the input and reference pictures into a plurality of blocks can be performed by either a picture processing unit 12 or the storage unit 14.

In that case, the motion detector 15 acquires the input picture on which the block partitioning is performed and the reference picture on which the block partitioning is performed. The motion detector 15 can be further configured in such a way as to read data about each block from either the picture processing unit 12 or the storage unit 14 (addressing).

The motion detector then, in step ST1202, calculates a motion determination index value for each block on the basis of the input picture and the reference picture.

Next, the motion detector, in step ST1203, performs primary motion determination. As a concrete example, the motion detector determines whether or not the motion determination index value is equal to or greater than the corresponding sensitivity parameter for each block, like that in accordance with Embodiment 1.

When the motion determination index value is equal to or greater than the corresponding sensitivity parameter, the motion detector shifts to step ST1204 and determines that "there is a motion (determination 1)." In contrast, when the motion determination index value is less than the corresponding sensitivity parameter, the motion detector shifts to step ST1205 and determines that "there is no motion (determination 1)."

Next, the motion detector, in step ST1206, performs secondary motion determination. As a concrete example, the motion detector determines whether or not the number of blocks each of which is determined, through the primary motion determination, to be a one in which "there is a motion (determination 1)" is equal to or greater than the set block number.

When the number of blocks each of which is determined as above is equal to or greater than the set block number, the motion detector shifts to step ST1207 and determines that "there is a motion (determination 2)." In contrast, when the number of blocks each of which is determined as above is less than the set block number, the motion detector shifts to step ST1208 and determines that "there is no motion (determination 2)."

The motion detector then, in step ST1209, outputs the motion detection result 22 acquired through the secondary motion determination to the input output unit 13. The motion detector can be alternatively configured in such a way as to, only when the motion detection result 22 shows "there is a motion (determination 2)", output that motion detection result 22.

As mentioned above, because the monitoring system in accordance with this Embodiment 3 is configured in such a way as to determine whether or not the number of blocks each of which has a motion is equal to or greater than the set block number, the monitoring system can distinguish small moving objects, such as small animals, and persons.

### Embodiment 4

Although the case in which a picture is partitioned into a plurality of blocks and the motion determination is performed on each of the blocks is shown in Embodiments 1 to 3, the blocks after the partitioning do not have to have a uniform size. In Embodiment 4, a case in which a motion detector 15 (a block partitioner) partitions a picture (each of input and reference pictures) into blocks having a size in one of regions into which the picture is divided and blocks having a different size in the other region will be shown.

The basic configuration of a monitoring camera 1 in accordance with Embodiment 4 is the same as that of the monitoring camera 1 in accordance with Embodiment 1 shown in FIG. 2, and the explanation will be made by focusing on a different portion.

Although the following explanation will be made by focusing on a case in which the monitoring camera 1 performs motion determination, also in the case of Embodiment 4, a picture acquired by the monitoring camera 1 can be input to a network recorder 4 and the network recorder 4 can alternatively perform the motion determination on the basis of the picture input thereto, like in the case of Embodiment 1.

Further, also in the case of Embodiment 4, the picture acquired by the monitoring camera 1 can be alternatively input to a PC 3 for monitoring and the PC 3 for monitoring can alternatively perform the motion determination on the basis of the picture input thereto, like in the case of Embodiment 1.

Further, information indicating the sizes of the blocks in the two or more regions into which the picture is divided can be acquired, as a setting parameter 21, from the PC 6 for setting by an input output unit 13 (a block information acquirer).

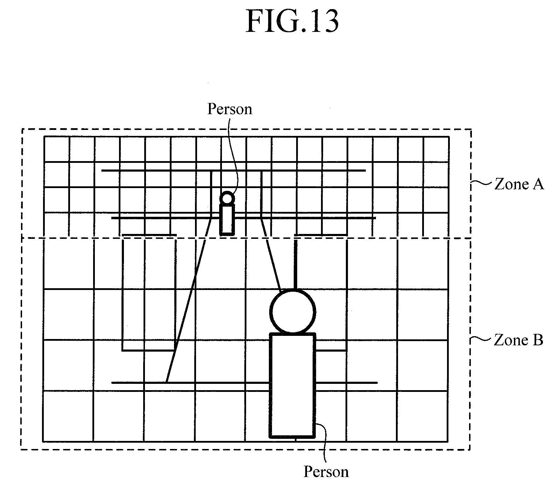

An example of a method of partitioning a picture into blocks in accordance with Embodiment 4 will be shown in FIG. 13. While a picture is partitioned into blocks having a uniform size in the example of FIG. 3, blocks in a region (a zone A) farther from the monitoring camera 1 are set to have a size smaller than that of blocks in a region (a zone B) closer to the monitoring camera 1, in the example of FIG. 13. This is because an object exhibits a size different dependently upon the distance from the monitoring camera 1 to the target area.

By, in this way, partitioning a picture into blocks while making the sizes of blocks be different in consideration of the distance between the monitoring camera 1 and the target area when identifying a moving object within the picture, the monitoring system can perform the motion determination corresponding to the distance from the monitoring camera 1 to the target area on any position within the picture of the target to be monitored.

When an object moving far from the monitoring camera 1 and another object moving close to the monitoring camera 1 are moving at the same speed, their movement distances in appearance within the screen differ from each other. Therefore, when a person seen in the zone A farther from the monitoring camera 1 and another person seen in the zone B closer to the monitoring camera 1 are moving at the same speed in the example of FIG. 13, the motion of the person in the zone A in the screen is observed to be small while the motion of the other person in the zone B in the screen is observed to be large.

In a case in which all the blocks have a uniform size within the screen, when persons have the same motion within the screen, the motion of a person moving in a region closer to the monitoring camera 1 is observed to be large while the motion of another person moving in a region farther from the monitoring camera 1 is observed to be small, and therefore the motion of any object can be determined by taking into consideration the distance from the monitoring camera 1.

In contrast with this, by making the sizes of blocks be different according to the distance from the monitoring camera 1, objects can be made to move just one block during the same time period. More specifically, when persons are moving at the same speed within the screen, the distance which a person can move in a region farther from the monitoring camera 1 within a time period during which another person moves between blocks in a region closer to the monitoring camera 1 is set to one block.

As a result, although the blocks in the zone closer to the monitoring camera 1 have a size larger than those in the other zone farther from the monitoring camera 1, when persons are moving at the same speed in both the groups of blocks, they can be moved respectively between blocks within the same time period or time periods close to each other.

By then determining the motion determination index value by using an individual sensitivity parameter for each of the groups of blocks closer to and blocks farther from the monitoring camera 1, the monitoring system can perform the same motion determination as that on blocks having a uniform size after the partitioning.

Although the case in which each picture is divided into two regions: the zone A and the zone B, and the size of blocks in one of the regions is made to be different from that of blocks in the other region is shown in Embodiment 4, the sizes of blocks within the picture can be arbitrary, and a region closer to the monitoring camera 1 can be partitioned into larger parts and a region farther from the monitoring camera 1 can be partitioned into finer parts. The present invention is not limited to those examples.

As mentioned above, because the monitoring system in accordance with this Embodiment 4 is configured in such a way as to make the sizes of blocks in a plurality of regions, into which each of the pictures (the input picture and the reference picture) is partitioned, be different and perform the block partitioning, the monitoring system can perform the motion determination corresponding to the distance from the monitoring camera 1 to the target area on any position within the picture of the target to be monitored.

### Embodiment 5

In Embodiments 1 to 4, the case in which the sensitivity parameter is set, as a setting parameter 21, by the PC 6 for setting according to the distance information of each block (the information indicating the distance between the target area seen in the block and the monitoring camera 1) or the optical influence information (the information indicating whether or not there is an influence of a light source upon the target area seen in the block, the degree of the influence, and the type of the influence) is shown.

In contrast with this, the distance information can be set, as a setting parameter 21, by the PC 6 for setting, and this distance information can be converted into the sensitivity parameter and this sensitivity parameter can be used. The conversion of the distance information into the sensitivity parameter can be performed by the PC 6 for setting, or can be alternatively performed by the monitoring camera 1.

Also in the case of Embodiment 5, a picture acquired by the monitoring camera 1 can be input to the network recorder 4 and the network recorder 4 can alternatively perform the motion determination on the basis of the picture input thereto, like in the case of Embodiment 1.

Further, also in the case of Embodiment 5, the picture acquired by the monitoring camera 1 can be alternatively input to the PC 3 for monitoring and the PC 3 for monitoring can alternatively perform the motion determination on the basis of the picture input thereto, like in the case of Embodiment 1.

In the case in which the monitoring camera 1 performs the above-mentioned conversion, a function (a distance acquirer) of acquiring the distance information is disposed in the input output unit 13, and the conversion function (a detection sensitivity acquirer) is disposed in either one of the input output unit 13, the storage unit 14 and the motion detector 15.

By setting the sensitivity parameter according to the distance information for each block in this way, erroneous motion detection and omissions in motion detection can be prevented.

The distance information can be the absolute value of the distance or can be index information. For example, the index information is one indicating "far" or "close, "far", "middle" or "close, "distance 1" "distance 2", ... or "distance N", or the like. As an alternative, as the index information, information indicating two-dimensional space or three-dimensional space, such as "horizontal distance 1", ... or "horizontal distance N", or "vertical distance 1", ... or "vertical distance N", can be used.

More specifically, the index information can be arbitrary as long as the index information is one indicating the distance from the monitoring camera 1 to the target area, and the present invention is not limited to those examples.

Further, the optical influence information can be set, as a setting parameter 21, by the PC 6 for setting, and this optical influence information can be converted into the sensitivity parameter and this sensitivity parameter can be used. The conversion of the optical influence information into the sensitivity parameter can be performed by the PC 6 for setting, or can be alternatively performed by the monitoring camera 1.

In the case in which the monitoring camera 1 performs the above-mentioned conversion, a function (an optical influence information acquirer) of acquiring the optical influence information is disposed in the input output unit 13, and the conversion function (a detection sensitivity acquirer) is disposed in either one of the input output unit 13, the storage unit 14 and the motion detector 15.

By setting the sensitivity parameter according to the optical influence information for each block in this way, erroneous motion detection and omissions in motion detection due to the influence of light can be prevented.

As a concrete example of the type of the influence of light, the influence type being indicated by the optical influence information, there is "a flicker", "fluctuations", "blinking", or the like. As the optical influence information, all the above-mentioned pieces of information including "a flicker", "fluctuations" and "blinking" can be used, or a combination of one or more pieces of those pieces of information can be used.

As an alternative, the optical influence information can be light information about direct light, light information about indirect light caused by reflection, light information about an artificial light source (a fluorescent lamp, an electric lamp, an LED, or the like), or other light information (any of the above-mentioned pieces of light information is either one of "a flicker", "fluctuations" and "blinking", or a combination of those pieces of light information), and the present invention is not limited to those examples.

Further, the case in which the set block number is set, as a setting parameter 21, by the PC 6 for setting is shown in Embodiment 3. In contrast with this, the distance information can be set, as a setting parameter 21, by the PC 6 for setting, and this distance information can be converted into the set block number and this set block number can be used. The conversion of the distance information into the set block number can be performed by the PC 6 for setting, or can be alternatively performed by the monitoring camera 1.

In the case in which the monitoring camera 1 performs the above-mentioned conversion, a function (a distance acquirer) of acquiring the distance information is disposed in the input output unit 13, and the conversion function (a set block number acquirer) is disposed in either one of the input output unit 13, the storage unit 14 and the motion detector 15.

By setting the set block number according to the distance information for each block in this way, erroneous motion detection and omissions in motion detection can be prevented.

As mentioned above, the monitoring system in accordance with this Embodiment 5 can prevent erroneous motion detection and omissions in motion detection by setting the distance information or the optical influence information for each block, and converting this information into the sensitivity parameter or the set block number and then using the sensitivity parameter or the set block number for the motion determination.

### Embodiment 6

In Embodiment 6, a case of combining Embodiments 1 to 5 will be shown. In an example shown hereafter, a case of performing, as primary motion determination, the motion determination based on the sensitivity parameter for each block, which is shown in Embodiment 1, performing, as secondary motion determination, the motion determination based on the consecutive frame number, which is shown in Embodiment 2, and performing, as tertiary motion determination, the motion determination based on the set block number, which is shown in Embodiment 3, will be shown.

Although the following explanation will be made by focusing on a case in which the monitoring camera 1 performs the motion determination, also in the case of Embodiment 6, a picture acquired by the monitoring camera 1 can be input to the network recorder 4 and the network recorder 4 can alternatively perform the motion determination on the basis of the picture input thereto, like in the case of Embodiment 1.

Further, also in the case of Embodiment 6, the picture acquired by the monitoring camera 1 can be alternatively input to the PC 3 for monitoring and the PC 3 for monitoring can alternatively perform the motion determination on the basis of the picture input thereto, like in the case of Embodiment 1.

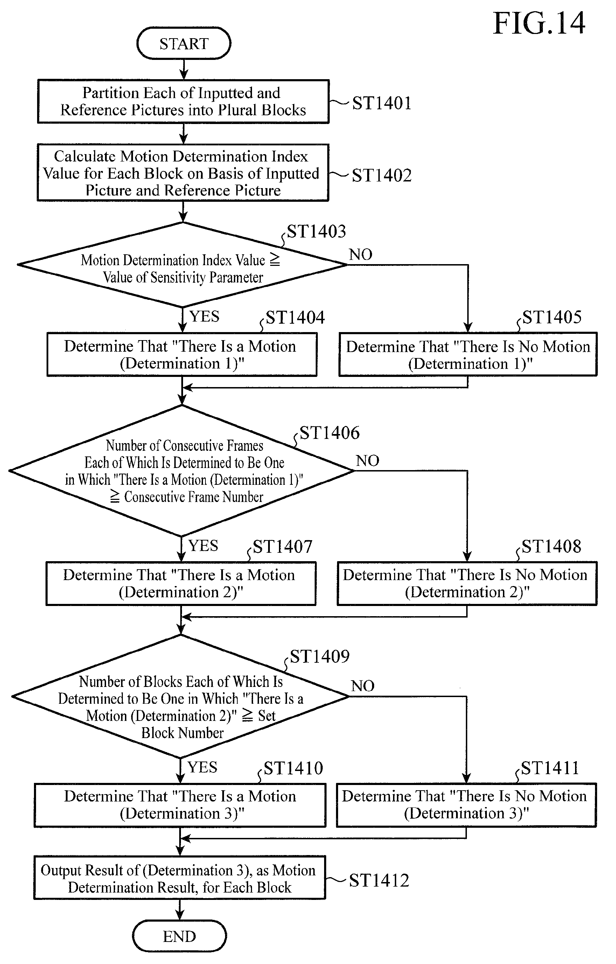

The motion determination process performed by the motion detector 15 in accordance with Embodiment 6 will be explained by using FIG. 14. Hereafter, a case in which the sensitivity parameter for each block is acquired, as a setting parameter 21, from the storage unit 14 will be shown.

In the motion determination process by the motion detector 15, the motion detector first, in step ST1401, partitions each of input and reference pictures into a plurality of blocks. As an alternative, the partitioning of each of the input and reference pictures into a plurality of blocks can be performed by either the picture processing unit 12 or the storage unit 14.

In that case, the motion detector 15 acquires the input picture on which the block partitioning is performed and the reference picture on which the block partitioning is performed. The motion detector 15 can be further configured in such a way as to read data about each block from either the picture processing unit 12 or the storage unit 14 (addressing).

The motion detector then, in step ST1402, calculates the motion determination index value for each block on the basis of the input picture and the reference picture.

Next, the motion detector, in step ST1403, performs the primary motion determination. As a concrete example, the motion detector determines whether or not the motion determination index value is equal to or greater than the corresponding sensitivity parameter for each block, like that in accordance with Embodiment 1.

When the motion determination index value is equal to or greater than the corresponding sensitivity parameter, the motion detector shifts to step ST1404 and determines that "there is a motion (determination 1)." In contrast, when the motion determination index value is less than the corresponding sensitivity parameter, the motion detector shifts to step ST1405 and determines that "there is no motion (determination 1)."

Next, the motion detector, in step ST1406, performs the secondary motion determination. As a concrete example, the motion detector determines whether or not the number of consecutive frames each of which is determined, through the primary motion determination, to be a one in which "there is a motion (determination 1)" is equal to or greater than the consecutive frame number, on a per block basis.

When the number of consecutive frames each of which is determined as above is equal to or greater than the consecutive frame number, the motion detector shifts to step ST1407 and determines that "there is a motion (determination 2)."

In contrast, when the number of consecutive frames each of which is determined as above is less than the consecutive frame number, the motion detector shifts to step ST1408 and determines that "there is no motion (determination 2)."

Next, the motion detector, in step ST1409, performs the tertiary motion determination. As a concrete example, the motion detector determines whether or not the number of blocks each of which is determined, through the primary motion determination, to be a one in which "there is a motion (determination 2)" is equal to or greater than the set block number, like that in accordance with Embodiment 3.

When the number of blocks each of which is determined as above is equal to or greater than the set block number, the motion detector shifts to step ST1410 and determines that "there is a motion (determination 3)."

In contrast, when the number of blocks each of which is determined as above is less than the set block number, the motion detector shifts to step ST1411 and determines that "there is no motion (determination 3)." In the tertiary motion determination, the motion detector can alternatively determine whether or not the number of blocks adjacent (consecutive) within the picture each of which is determined to be a one in which "there is a motion (determination 2)" is equal to or greater than the set block number.

The motion detector then, in step ST1412, outputs the motion detection result 22 acquired through the secondary motion determination to the input output unit 13. The motion detector can be alternatively configured in such a way as to, only when the motion detection result 22 shows "there is a motion (determination 3)", output that motion detection result 22.

### Embodiment 7

In Embodiment 1, the case in which the monitoring system performs the motion determination by using the sensitivity parameter set according to the distance from the monitoring camera 1 to the target area is shown. More specifically, the case in which the reference point for the distance to the target area is the installation position of the monitoring camera 1 is shown.

In contrast with this, in Embodiment 7, a case in which the reference point is not the installation position of the monitoring camera 1 will be shown. The performance of motion determination using the sensitivity parameter set according to the distance from the reference point to a target area is the same as that shown in Embodiment 1.

Although the following explanation will be made by focusing on a case in which a monitoring camera 1 performs the motion determination, a picture acquired by the monitoring camera 1 can be input to a network recorder 4 and the network recorder 4 can alternatively perform the motion determination on the basis of the picture input thereto, like in the case of Embodiment 1.

Further, also in the case of Embodiment 7, the picture acquired by the monitoring camera 1 can be alternatively input to a PC 3 for monitoring and the PC 3 for monitoring can alternatively perform the motion determination on the basis of the picture input thereto, like in the case of Embodiment 1.

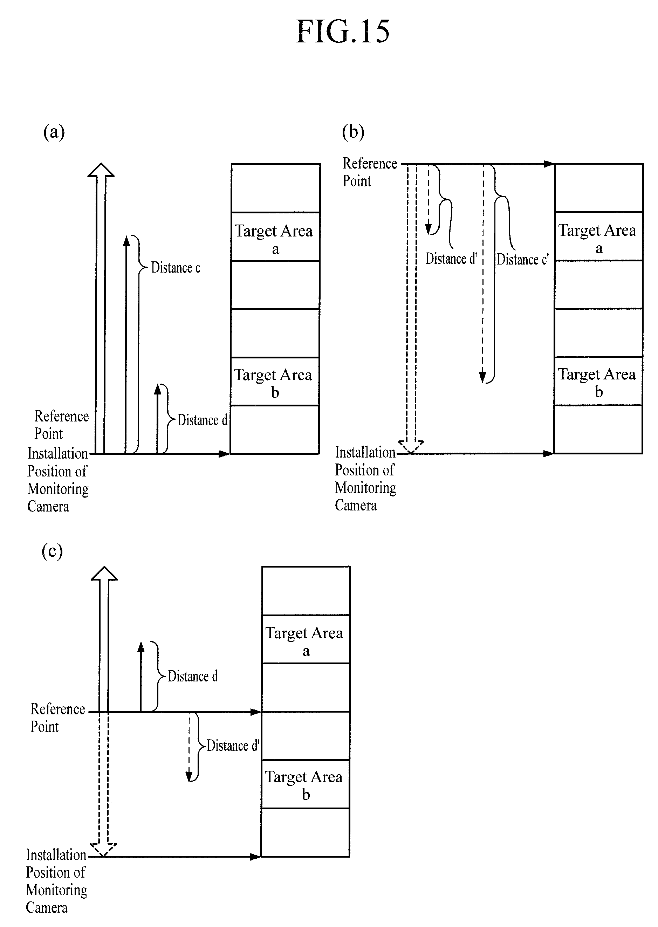

FIG. 15 is a diagram explaining a relation between the reference point and the distance from the reference point to the target area. Hereafter, for convenience's sake, the explanation will be made by assuming that the target area is partitioned into blocks at equal intervals, but the present invention is not limited to that example.

Further, the explanation will be made by assuming that the distance to the target area is the distance to a midpoint of the target area, but the present invention is not limited to that example.

FIG. 15(a) is a diagram showing a case in which the reference point shown in Embodiment 1 is the installation position of the monitoring camera 1. In this case, the distance from the reference point to the target area a is the one c (they are 5 blocks apart from each other). Further, the distance from the reference point to the target area b is the one d (they are 2 blocks apart from each other).

FIG. 15(b) is a diagram showing a case in which the reference point is at a position farthest from the installation position of the monitoring camera 1 (at the farthest position where the monitoring camera 1 can focus). In this case, the distance from the reference point to the target area a is the one d' (they are 2 blocks apart from each other). Further, the distance from the reference point to the target area b is the one c' (they are 5 blocks apart from each other).

FIG. 15(c) is a diagram showing a case in which the reference point is at a position between the installation position of the monitoring camera 1 and the farthest position from the monitoring camera 1.

In this case, the distance from the reference point to the target area a is the one d (they are 2 blocks apart from each other). The distance from the reference point to the target area b is the one d' (they are 2 blocks apart from each other).

As a concrete example of a case in which the reference point is not the installation position of the monitoring camera 1, there can be a case in which the reference point is a point, a target area, a block or a zone, within the picture, where the monitoring camera 1 focuses most clearly (referred to as a just focused region).

In conventional technologies, in the case in which the reference point is a just focused region, the following problem arises.

For example, when persons are moving similarly in a region closer to and in a region farther from the just focused region within the picture, there may occur a phenomenon in which the motion of a person moving in a region closer to the just focused region is easily detected while the motion of another person moving in a region farther from the just focused region is hard to detect if the sensitivity parameter is set to a single certain value.

This is because in the case of using a method of performing the motion determination according to a change state of the pattern of an object, a change state of the pixel level of a target area to be monitored, or the like, a fine pattern or the like of a person who is closer to the just focused region can be observed while a fine pattern or the like of another person who is farther from the just focused region collapses and cannot be observed.

As a result, there occurs a phenomenon in which while the motion of a person closer to the just focused region is easily detected, the motion of another person farther from the just focused region is hard to detect. Therefore, there arises a problem that there is a case in which the motion of a person farther from the just focused region is not detected.

In order to solve the above-mentioned problem, there can be considered a method of increasing the sensitivity for motion detection (making it possible to determine that "there is a motion" even though the number of differences is small). However, in this case, there is an increase in the frequency of erroneous detection to determine that "there is a motion" even from a small difference which is not a person's motion.

Further, in order to solve the above-mentioned problem, there can be considered a method of lowering the sensitivity for motion detection (making it possible not to determine that "there is a motion" even when the signal level changes a little). However, in this case, there is an increase in omissions in detection including non-detection of the motion of a person and non-detection of the motion of a target to be monitored.

Next, a concrete example of a method of performing the motion determination by using the sensitivity parameter set according to the distance from that reference point to the target area in the case in which the reference point is not the installation position of the monitoring camera 1 will be shown below. Hereafter, the explanation will be made by focusing on a portion different from Embodiment 1.

In Embodiment 7, sensitivity parameters (first and second sensitivity parameters) which are different for a region closer to the just focused region and for a region farther from the just focused region are set to the picture. As a result, when persons are moving similarly, not only as to the motion determination index value acquired for a person moving in a region closer to the just focused region, but also as to the motion determination index value acquired for a person moving in a region farther from the just focused region, the motion detector can determine that "there is a motion" according to the value.

As mentioned above, in accordance with Embodiment 7, in order to perform the motion determination in consideration of the difference in the detection sensitivity, the difference being dependent upon the distance from the just focused region to the target area, the motion detector 15 (the block partitioner) partitions each picture into a plurality of blocks and the PC 6 for setting sets the sensitivity parameter for each of the blocks. At that time, the PC 6 for setting sets the sensitivity parameter according to the distance between the target area in each of the blocks and the just focused region.

More specifically, because it is hard to detect the motion of a target staying farther from the just focused region as compared with that of a target staying closer to the just focused region, the PC for setting sets the sensitivity parameter for a region farther from the just focused region to a value which makes it easier to detect a motion, as compared with the sensitivity parameter for a region closer to the just focused region.

Further, instead of setting the just focused region, the just focused region can be estimated from the position of the focus lens which the monitoring camera 1 has, the picture on which the picture processing is performed by the picture processing unit 12, or the like.

The sensitivity parameter is set by the PC 6 for setting according to the distance information of each block (the information indicating the distance between the target area seen in the block and the just focused region).

As an alternative, the above-mentioned distance information can be set as a setting parameter 21, by the PC 6 for setting, and this distance information can be converted into the sensitivity parameter and this sensitivity parameter can be used. The conversion of the distance information into the sensitivity parameter can be performed by the PC for setting, or can be alternatively performed by the monitoring camera 1.

In the case in which the monitoring camera 1 performs the above-mentioned conversion, a function (a distance acquirer) of acquiring the distance information is disposed in the input output unit 13, and the conversion function (a detection sensitivity acquirer) is disposed in either one of the input output unit 13, the storage unit 14 and the motion detector 15.

Further, the configuration in accordance with Embodiment 7 can be used while being combined with the configuration in accordance with Embodiment 1. In that case, what is necessary is just to perform the motion determination by using the sensitivity parameter set according to both the distance (1) from the monitoring camera 1 to the target area, and the distance (2) from the just focused region to the target area. The sensitivity parameter can be defined by making the above-mentioned distances (1) and (2) be variable.

As shown in FIGS. 15(b) and 15(c), there are two kinds of the above-mentioned distance (2) from the just focused region (the reference point) to the target area. More specifically, there are two cases: a case in which the portion extending from the just focused region to the target area has a direction going away from the monitoring camera 1 (the distance d in FIG. 15(c)); and a case in which the portion extending from the just focused region to the target area has a direction getting close to the monitoring camera 1 (the distance c' and the distance d' shown in FIG. 15(b), and the distance d' shown in FIG. 15(c)).

Therefore, what is necessary is just to perform the motion determination by using the sensitivity parameter set according to the above-mentioned distance (1) from the monitoring camera 1 to the target area, the distance (2-1) in the case in which the portion extending from the just focused region to the target area has a direction going away from the monitoring camera 1, and the distance (2-2) in the case in which the portion extending from the just focused region to the target area has a direction getting close to the monitoring camera 1. The sensitivity parameter can be defined by making the above-mentioned distances (1), (2-1) and (2-2) be variable.

### Embodiment 8

In Embodiment 1, the case in which the motion determination is performed by using the sensitivity parameter set according to the distance from the monitoring camera 1 to the target area is shown. In contrast with this, in Embodiment 8, a case in which a function of changing the zoom magnifying power is disposed in a monitoring camera 1, and the sensitivity parameter is set (updated) automatically according to the zoom magnifying power will be shown.

Although the following explanation will be made by focusing on a case in which the monitoring camera 1 performs motion determination, also in the case of Embodiment 8, a picture acquired by the monitoring camera 1 can be input to a network recorder 4 and the network recorder 4 can alternatively perform the motion determination on the basis of the picture input thereto, like in the case of Embodiment 1.

Further, also in the case of Embodiment 8, the picture acquired by the monitoring camera 1 can be alternatively input to a PC 3 for monitoring and the PC 3 for monitoring can alternatively perform the motion determination on the basis of the picture input thereto, like in the case of Embodiment 1.

The monitoring camera 1 has a function of changing the zoom magnifying power by using a zoom lens (zooming in (telephoto) and zooming out (wide angle)). A detection sensitivity acquirer then sets (updates) the corresponding sensitivity parameter automatically according to the zoom magnifying power set by the monitoring camera 1.

First, an automatic setting (update) of the sensitivity parameter at the time when the monitoring camera 1 zooms in will be explained.

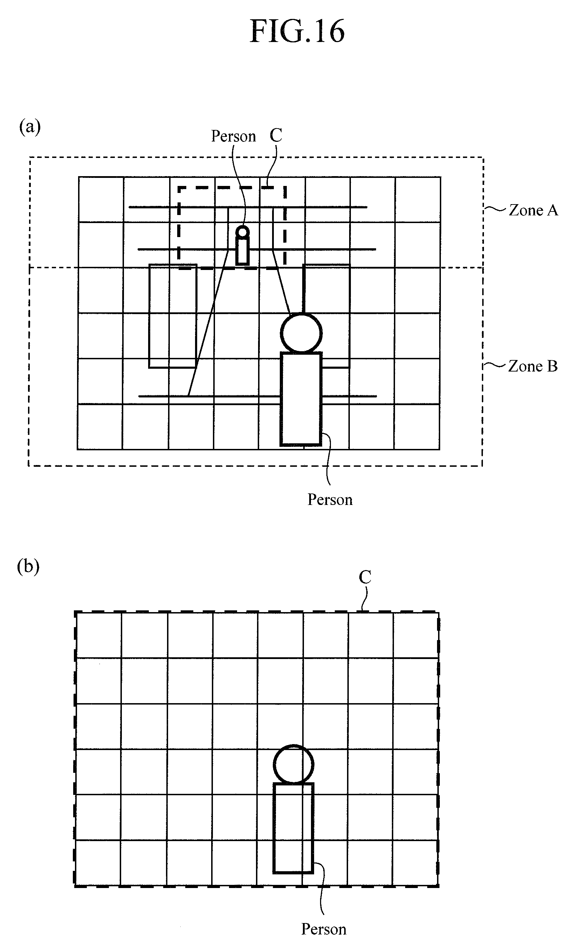

It is assumed that in an example of FIG. 16(a), the monitoring camera 1 zooms in and enlarges a region C in a zone A, the region being far from the monitoring camera 1, and a picture shown in FIG. 16(b) is acquired. By zooming in the region by using the monitoring camera 1, as shown in FIG. 16(b), objects can be observed to have sizes similar to those of objects at shorter distances from the monitoring camera 1.

More specifically, the distance from the monitoring camera 1 can be changed in appearance according to the zoom magnifying power of the monitoring camera 1. Therefore, the detection sensitivity acquirer updates the sensitivity parameter independently for each block or each zone within the screen according to the zoom magnifying power.

As a concrete example of the method of updating the sensitivity parameter according to the zoom magnifying power, there is a method (1) of multiplying the individual sensitivity parameter for each block or each zone by a threshold conversion parameter corresponding to the zoom magnifying power and setting the acquired sensitivity parameter to that block or that zone.

Further, there is a method (2) of referring to a sensitivity parameter table corresponding to the zoom magnifying power and setting the sensitivity parameter corresponding to each block or each zone.

Further, also when the monitoring camera 1 zooms out, the same process as that as above is performed. When the screen becomes a wide angle because of the zooming out, objects can be observed to have sizes similar to those of objects at longer distances from the monitoring camera 1.

More specifically, the distance from the monitoring camera 1 can be changed in appearance according to the zoom magnifying power of the monitoring camera 1. Therefore, the detection sensitivity acquirer updates the sensitivity parameter independently for each block or each zone within the screen according to the zoom magnifying power.

A concrete example of the method of updating the sensitivity parameter according to the zoom magnifying power is the same as that at the time of the above-mentioned zooming in, the explanation of the concrete example will be omitted hereafter.

### Embodiment 9

In Embodiments 1 to 8, the distance between each object and the monitoring camera 1 can be measured by using a sensor. Although the following explanation will be made by focusing on a case in which the monitoring camera 1 performs the motion determination, also in the case of Embodiment 9, a picture acquired by the monitoring camera 1 can be input to the network recorder 4 and the network recorder 4 can alternatively perform the motion determination on the basis of the picture input thereto, like in the case of Embodiment 1.

Further, also in the case of Embodiment 9, the picture acquired by the monitoring camera 1 can be alternatively input to the PC 3 for monitoring and the PC 3 for monitoring can alternatively perform the motion determination on the basis of the picture input thereto, like in the case of Embodiment 1.

The sensor is an ultrasonic sensor mounted to the monitoring camera 1, and measures the distance between each object and the monitoring camera 1 for each block from the time difference between the time when an ultrasonic wave is output and the time when the output ultrasonic wave reflected by that object returns thereto.

The detection sensitivity acquirer sets, on the basis of the distance for each block which is measured by the sensor, the sensitivity parameter according to that distance for that block or each zone within the screen.

In the measurement on each block, the distance to a pixel at a predetermined position (e.g., at the center, a corner or another representative position of the block, or in a specified region of the block) or to a specified region is measured (completely automatically).

As an alternative, the distance to a portion (a pixel or a specified region) in each block of the monitor screen, the portion being specified by a surveillant, is measured (semi-automatically). As an alternative, the distance to a predetermined object (the distance to the specified object) with a region enclosed by edges being set as an object is measured. Any other method is used as long as it can measure the distance for each block can be alternatively used, and the present invention is not limited to those examples.

Although an ultrasonic sensor is used as the sensor in Embodiment 9, an infrared sensor or another sensor can be alternatively used. More specifically, any other sensor is used as long as it can send a radar, an acoustic wave, a radio wave, or a signal wave and measure the distance from the time difference between the time when the radar, the acoustic wave, the radio wave, or the signal wave is output and the time when the radar, the acoustic wave, the radio wave, or the signal wave reflected by an object returns thereto, and the present invention is not limited to those examples.

In addition, while the invention has been described in its preferred embodiments, it is to be understood that an arbitrary combination of two or more of the embodiments can be made, various changes can be made in an arbitrary component in accordance with any one of the embodiments, and an arbitrary component in accordance with any one of the embodiments can be omitted within the scope of the invention.

### INDUSTRIAL APPLICABILITY

The monitoring camera in accordance with the present invention can prevent erroneous motion detection and omissions in motion detection in each of blocks into which a picture is partitioned, with a simple and low-cost configuration, and is suitable for use as a monitoring camera or the like that performs motion determination on the basis of a picture acquired by performing shooting on a target area.

### EXPLANATIONS OF REFERENCE NUMERALS

- 1: monitoring camera
- 2: network
- 3: PC for monitoring
- 4: network recorder
- 5: monitor
- 6: PC for setting
- 10: picture shooter
- 11: picture input unit
- 12: picture processing unit
- 13: input output unit
- 14: storage unit
- 15: motion detector
- 21: setting parameter
- 22: motion detection result
- 31: processed picture.

## Claims

1. A monitoring camera comprising:
a picture shooter to perform shooting on a target area to acquire a picture;
a block partitioner to partition the picture acquired by the picture shooter into a plurality of blocks;
a detection sensitivity acquirer to acquire detection sensitivity for each of the blocks into which the picture is partitioned by the block partitioner;
a motion detector to determine presence or absence of a motion for each of the blocks, into which the picture is partitioned by the block partitioner, according to corresponding detection sensitivity acquired by the detection sensitivity acquirer; and
an outputter to output a detection result acquired by the motion detector.

2. The monitoring camera according to claim 1,
wherein the motion detector determines whether or not a block having a motion continuing for a set time period or longer is included in the blocks into which the picture is partitioned by the block partitioner.

3. The monitoring camera according to claim 2,
wherein the monitoring camera includes a set time period acquirer that acquires information indicating the set time period, and the motion detector uses the set time period acquired by the set time period acquirer.

4. The monitoring camera according to claim 1,
wherein the motion detector determines whether or not a number of blocks each having a motion, among the blocks into which the picture is partitioned by the block partitioner, is equal to or greater than a set block number.

5. The monitoring camera according to claim 4,
wherein the monitoring camera includes a set block number acquirer that acquires information indicating the set block number, and the motion detector uses the set block number acquired by the set block number acquirer.

6. The monitoring camera according to claim 1,
wherein the monitoring camera includes a block information acquirer that acquires information indicating a size of the block in each of a plurality of regions into which the picture is divided, and the block partitioner partitions the picture into blocks having a plurality of sizes according to the size of the block acquired by the block information acquirer.

7. The monitoring camera according to claim 6,
wherein the monitoring camera includes a distance acquirer that acquires information indicating a distance between the target area in the block and the monitoring camera itself, and the block information acquirer acquires the size of the block from the distance acquired by the distance acquirer.

8. The monitoring camera according to claim 5,
wherein the monitoring camera includes a distance acquirer that acquires information indicating a distance between the target area in the block and the monitoring camera itself, and the set block number acquirer acquires the set block number from the distance acquired by the distance acquirer.

9. The monitoring camera according to claim 1,
wherein the detection sensitivity acquirer acquires the detection sensitivity set according to a distance between the target area in the block and a reference point.

10. The monitoring camera according to claim 9,
wherein the reference point is an installation position of the monitoring camera itself.

11. The monitoring camera according to claim 1,
wherein the monitoring camera includes a distance acquirer that acquires information indicating a distance between the target area in the block and a reference point, and the detection sensitivity acquirer acquires the detection sensitivity from the distance acquired by the distance acquirer.

12. The monitoring camera according to claim 11,
wherein the reference point is an installation position of the monitoring camera itself.

13. The monitoring camera according to claim 1,
wherein the detection sensitivity acquirer acquires the detection sensitivity set according to an influence of light upon the target area in the block.

14. The monitoring camera according to claim 1,
wherein the monitoring camera includes an optical influence information acquirer that acquires information indicating an influence of light upon the target area in the block, and the detection sensitivity acquirer acquires the detection sensitivity from the influence of light acquired by the optical influence information acquirer.

15. The monitoring camera according to claim 1,
wherein zoom magnifying power for shooting is made to be variable, and the detection sensitivity acquirer updates the detection sensitivity according to the zoom magnifying power.

16. The monitoring camera according to claim 1,
wherein the detection sensitivity acquirer acquires the detection sensitivity from a distance between the target area and the monitoring camera itself which is measured by a sensor.

17. A monitoring system comprising:
a picture shooter to perform shooting on a target area to acquire a picture;
a block partitioner to partition the picture acquired by the picture shooter into a plurality of blocks;
a detection sensitivity acquirer to acquire detection sensitivity for each of the blocks into which the picture is partitioned by the block partitioner;
a motion detector to determine presence or absence of a motion for each of the blocks, into which the picture is partitioned by the block partitioner, according to corresponding detection sensitivity acquired by the detection sensitivity acquirer; and
an outputter to output a detection result acquired by the motion detector.

18. A motion detection method comprising:
a shooting step of a picture shooter performing shooting on a target area to acquire a picture;
a block partitioning step of a block partitioner partitioning the picture acquired by the picture shooter into a plurality of blocks;
a detection sensitivity acquiring step of a detection sensitivity acquirer acquiring detection sensitivity for each of the blocks into which the picture is partitioned by the block partitioner; and
a motion determining step of a motion detector determining presence or absence of a motion for each of the blocks, into which the picture is partitioned by the block partitioner, according to corresponding detection sensitivity acquired by the detection sensitivity acquirer.
